# EUROPEAN PATENT SPECIFICATION

(11) **EP 2 115 282 B1**
(45) Date of publication and mention of the grant of the patent: **09.01.2013**
(21) Application number: 08705345.0
(22) Date of filing: 24.01.2008
(51) Int. Cl.: F01N 11/00, F01N 3/20, F02D 43/00

(54) **METHOD AND SYSTEM FOR TESTING A VEHICLE EXHAUST SYSTEM**
VERFAHREN UND SYSTEM ZUM TESTEN EINES FAHRZEUGABGASSYSTEMS
PROCÉDÉ ET SYSTÈME POUR TESTER UN SYSTÈME D'ÉCHAPPEMENT DE VÉHICULE

(30) Priority: 31.01.2007 SE 0700235
(43) Date of publication of application: 11.11.2009
(73) Proprietor: Scania CV Aktiebolag (publ), 151 87 Södertälje (SE)
(72) Inventor: ARRHENIUS, Gustav, S-760 40 Väddö (SE); ERIKSSON, Lars, S-153 38 Järna (SE); CARLSSON, Ulf, S-151 38 Södertälje (SE)
(86) International application number: PCT/SE2008/050073
(87) International publication number: WO 2008/094116

(56) References cited:
- JP-A- 2005 146 904
- JP-A- 2005 155 532
- JP-A- 2005 155 534
- US-A1- 2006 000 201

## Description

### Field of the invention

The present invention relates to vehicle exhaust emission systems, and in particular to a method for heating an SCR (Selective catalytic reduction) catalytic converter of a vehicle. The present invention also relates to a method for testing exhaust systems of vehicles having an SCR catalytic converter.

### Background of the invention

Due to increasing governmental concerns regarding pollution and air quality, in particular in urban areas, numerous exhaust standards or regulations from various jurisdictions, e.g., in North America, Europe and Asia, have been generated.

For example, the European emission standards are sets of requirements defining the acceptable limits for exhaust emissions of new vehicles sold in EU member states. These standards are commonly denoted Euro 1, Euro 2, Euro 3, Euro 4 and Euro 5, and consist of increasingly stringent requirements.

Emissions of nitric oxides (NOₓ₎, hydrocarbons (HC), carbon monoxide (CO), and particulates are regulated for most types of vehicles in these standards. Compliance to such regulations are usually determined by running the vehicle engine at a standardised test cycle.

However, even if a particular vehicle has proved to be compliant with current emission requirements, components of the vehicle exhaust emission control system eventually can be subject to a fault and need replacement. Such faults normally generate settings of, or activation of "flags" (diagnostic trouble codes) in the vehicle control system, which flags later can be read by an automobile mechanic (garage mechanic) using a suitable vehicle diagnostics tool, implemented, e.g., in a laptop or desktop computer connected to the vehicle. The diagnostics tool can also constitute an integrated part of the vehicle. The fault is also usually indicated to the vehicle driver, e.g., by activating a warning light or text message, so as to inform the driver that exhaust emissions are too high and allow the driver to contact a garage for taking proper actions.

The activation of flags also often involve, at least with regard to trucks, consequence actions such as, e.g., reducing available torque to a percentage of the maximum torque if there is a malfunction in the exhaust system, having as result that vehicle engine use is limited, e.g., by limiting the available torque, e.g., to 60% of maximum torque.

In such situations it is common that a garage mechanic performs necessary vehicle (exhaust control system).service and/or parts replacement in order to ensure proper operation of the exhaust emission control system once again.

If the vehicle is a private car, it can be enough that the mechanic performs what he believes are the proper actions, and then resets the flags of the vehicle control system so that a fault no longer is indicated.

With regard to heavy vehicles, however, such resetting of flags after service is, in many regions, not allowed. Instead, the vehicle has to perform self-tests, e.g., with regard to exhaust emissions, by measuring emissions using a vehicle onboard sensor, to ensure that the performed repairs actually have fixed the exhaust emission problem. When performing such onboard measuring, however, tests have to be performed for various engine loads, e.g. high, medium, and low engine load. Further, the components of the exhaust control system, such as the catalytic converter, have to be heated to normal working temperature in order to ensure normal operation.

Therefore, the vehicle is many times returned to the driver without the invalidation having been performed. This has as result that when the vehicle is returned from service, it may take a while before all required self-tests have been performed, since tests may have to be performed for various driving conditions. If such a vehicle is used for urban deliveries with frequent starts and stops, it may take days or weeks before all tests have been performed, and the vehicle is back to being fully operational.

One obvious solution to this problem would be that the mechanic takes the vehicle for a longer test drive. This however, can be rather time consuming, not to mention costly, Consequently there exists a need for a simplified method of validating that a fault has been repaired.

Another solution is to bring the vehicles to a central testing facility, and perform the tests on a stationary testing apparatus, such as a vehicle dynamometer, in order to perform necessary self-tests in a controlled manner. This however, has the disadvantage that the distance between garage and testing facility easily can exceed the distance necessary to perform a successful test drive.

US 2006/0000201 A1 discloses a method where, in the case of manual regeneration, a driver receiving a warning stops the vehicle and presses a manual regeneration switch to perform a forced regeneration. Then, the idle rotating speed is increased at the time of a vehicle stationary idling, a multi injection is performed by closing an exhaust brake, and a post injection is performed when an exhaust brake temperature rises up to an oxidation catalyst activation temperature or higher. In conclusion, there exists a need for an improved method for testing exhaust systems of vehicles having a catalytic converter that overcomes, or at least mitigates the disadvantages of current solutions.

### Summary of the invention

It is an object of the present invention to provide a method that solves the above mentioned problem. This object is achieved by the method according to the characterising portion of claim 1.

The present invention relates to a method for performing a test of a vehicle exhaust emission control system, comprising the step of heating an SCR catalytic converter of a vehicle, said vehicle comprising an internal combustion engine and a throttling device for throttling a combustion exhaust stream from said engine. The method comprises the steps of, when said vehicle is in a stationary state wherein the vehicle drive wheels supply substantially no load to said engine, controlling said throttling device and a fuel amount to be supplied to said engine such that at least a load is applied to said engine, wherein said load is above engine idling load, such that the exhaust gas generated in a combustion process of said engine is heated to such temperature that said catalytic converter can be heated to a temperature exceeding a predetermined temperature level, and, when said SCR catalytic converter is operating at a temperature exceeding said predetermined temperature level, measuring emissions from said SCR catalytic converter, and approving proper function of said exhaust emission control system if the content of at least one exhaust emission in said exhaust gas stream is below a threshold.

This has the advantage that the catalytic converter of the vehicle can be heated to its normal working temperature without having to take the vehicle for a test drive, or use a vehicle dynamometer.

Further, according to another aspect of the present invention, it is provided a method for performing a test of the vehicle exhaust emission system, in which the above described method is used to set engine load to desired test points, and wherein exhaust emissions at one or more test points are used to evaluate proper function of said exhaust emission control system.

This has the advantage that tests that otherwise require quite extensive driving, e.g., in order to perform exhaust emission tests for various engine loads, such as high, medium, and low engine loads, and wherein the catalytic converter has to be heated to a normal working temperature in order to ensure normal operation, can be performed with the vehicle standing still when using the present invention.

### Brief description of the drawings

Fig. 1 shows an example an exhaust emission control system in a vehicle with which the present invention may be advantageously utilised.
Fig. 2 shows a flow diagram according to an exemplary process of the present invention.
Fig. 3 shows a flow diagram according to another exemplary process of the present invention.

### Detailed description of preferred embodiments.

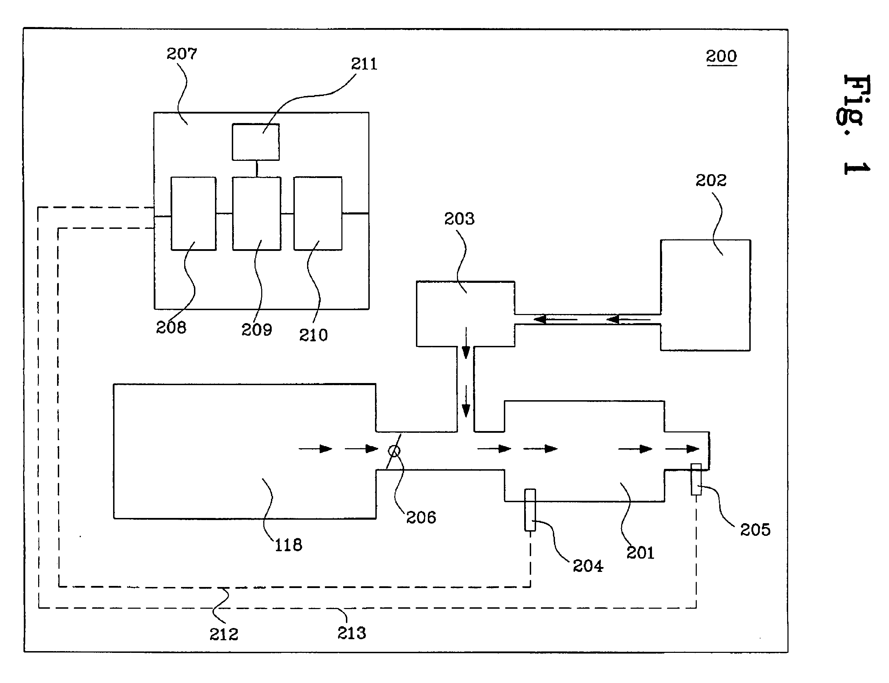

Fig. 1 discloses a vehicle engine 118 and exhaust emission control system of a vehicle 200. The exhaust emission control system consists of an SCR (Selective catalytic reduction) catalytic converter 201, a Urea tank 202, which is connected to a Urea Dosing System (UDS) 203. SCR is an after-treatment that requires a, usually urea-based, additive or reductant to reduce NOₓ emissions. The urea, mixed with air, is injected into the exhaust gas stream resulting from the engine combustion to cause a chemical reaction in the catalytic converter, which usually is integrated in a silencer. The gaseous or liquid reductant ammonia (urea, when heated, forms ammonia) is added to the exhaust gas stream from the engine upstream from the catalytic converter. The reductant is absorbed onto the catalytic converter 201 walls, and when the exhaust gas passes through the catalytic converter 201, the reductant reacts with NOₓ in the fuel gas to form water vapour (H20) and nitrogen gas (N2).

Further, a temperature sensor 204 is arranged in, or in proximity to the catalytic converter to measure its current temperature, and a Noₓ sensor 205 is provided in the exhaust gas stream leaving the catalytic converter in order to allow measurements of the exhaust gas content so as to allow a vehicle control system to detect faults/malfunctions in the exhaust emission system. Fig. 1 also discloses an actuator operated throttling device 206 for throttling the exhaust gas stream leaving the engine, the throttling device is commonly known as an exhaust brake. Exhaust brakes are used to create a retarding effect on the driving wheels of the vehicle. When throttling the exhaust stream, the exhaust is being compressed, and while no fuel is being applied the engine will strive to retard the vehicle. The amount of negative torque generated is usually directly proportional to the back pressure of the engine.

Fig. 1 also discloses an electrical control unit 207 in form of an engine control unit which controls the engine functions of the vehicle. The control unit 207 can be connected to a communication bus (not shown) for communication with other control units and/or electrical components of the vehicle.

Such communication bus systems are usually of CAN (Controller Area Network) type, although other kinds of suitable communication technologies can be used as well, e.g., TT-CAN or FlexRay. Among these functions of the control unit 207, there is an exhaust emission diagnostics system, which supervises and controls operation of the exhaust control system. For example, the diagnostics system monitors the NOₓ levels by means of said sensor 205 and the catalytic converter temperature using the temperature sensor 204. If the exhaust emission control system is subject to a fault, this fault can, for example, be identified by the diagnostics system, e.g., by concluding that the current NOₓ level is too high, or catalytic converter temperature diverges from a normal working temperature range. In the present description and claims, the term "normal working temperature" is intended to have the meaning: a temperature at which the catalytic converter works with an efficiency such that, e.g., reduction of exhaust gasses leaving the vehicle engine exceeds a threshold.

The control unit 207 comprises means 208 for receiving various signals from, e.g., various sensors, such as temperature sensor 204 and NOx sensor 205. These signals can be received, e.g., via messages transmitted on a CAN bus or, as indicated in the figure, by direct links 212, 213. The received signals, together with other information, such as data transmitted from other control units, can then be used in a data processing unit 209. The data processing unit 209 can, using the received sensor signals and data, and by means of a computer program which can be stored in a computer program product in form of storage means 211 in, or connected to the processing unit 209, perform engine control calculations for controlling engine operation and generate control signals for transmission, by means of output means 210, to, e.g., various electrically operated engine functions and the UDS system 203. The storage means can, for example, consist of one or more from the group: ROM (Read-Only Memory), PROM (Programmable Read-Only Memory), EPROM (Erasable PROM), Flash memory, EEPROM (Electrically Erasable PROM), hard disk drive.

As was mentioned above, faults normally generate settings of, or activation of "flags", which can act both as fault indicators as well as guidance for a mechanic trying to locate the probable cause of the fault. As also was mentioned above, consequence actions are usually taken, such as reducing available torque to a percentage of the maximum torque.

The present invention provides a method that enables heating of the catalytic converter to normal working temperature with a stationary vehicle, without the need of a vehicle dynamometer, i.e., the vehicle can be standing still with the gearbox in a neutral position, and, consequently, with no load applied to the vehicle engine by the transmission system, i.e., the vehicle drive wheels supply no load to said engine.

According to the present invention, an exhaust gas throttling device (such as the above described exhaust brake or a VGT-turbo (Variable Geometry Turbine) or a combination thereof) is used to enable heating of the catalytic converter right up to a set temperature level, e.g., the normal working temperature, which, for example, may be 190°C-300°C or even higher, e.g., up to 1000°C.

In the prior art, the exhaust brake has been used to heat the engine, at least to some extent, and also to maintain the temperature of an already heated particulate filter. For example, if the normal engine operating temperature is 80°C - 90°C, it has previously been possible to heat the engine to about half that temperature. However, it has not previously been realised that the exhaust brake can be used to such extent that the catalytic converter can reach normal working temperature while the vehicle is standing still. Merely standing still with idling engine, however, will not provide a sufficient engine load to accomplish the necessary heating.

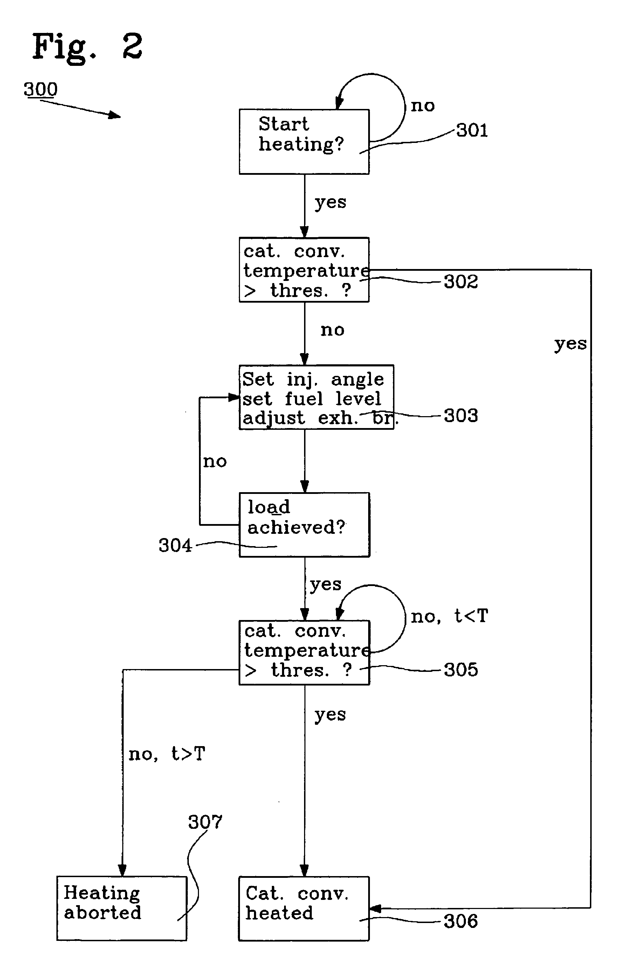

Fig. 2 shows a flow diagram 300 of an exemplary embodiment according to the present invention, according to which the catalytic converter is heated to a normal working temperature. The normal working temperature can, for example, be a minimum temperature of a temperature range that the catalytic converter must reach in order to start the desired exhaust emission control. The process starts in step 301, in which the process will remain for as long as no catalytic converter heating is requested. If, on the other hand, heating is requested, e.g., by a diagnostics system, as will be disclosed below, the process continues to step 302. In step 302 the temperature of the catalytic converter is measured, using the temperature sensor 204. If the temperature is higher than a predetermined temperature level, e.g., the lowest temperature at which the catalytic converter is considered to operate normally, e.g., 200°C, the process continues to step 306, where it is reported that the catalytic converter has reached its normal operating temperature. If the temperature, in step 302, is determined to be below the temperature level, the process continues to step 303, wherein a suitable engine load is determined, e.g., based on the current catalytic converter temperature. Alternatively, the load can be set to the minimum load at which exhaust gasses will reach a high enough temperature to ensure the desired heating of the catalytic converter. This load is substantially greater than the relatively low load the engine is subjected to during stationary engine idling, e.g., 5% ore more of the total power the engine can deliver. In order to obtain the desired engine load, the engine must be set to the desired operating point by adjusting engine speed and the amount of fuel and its delivery into the engine. In order to determine suitable fuel amount and engine speed, the vehicle control system can have a stored table with loads for various combinations of engine speed and fuel amount. Further, the injection time (angle) and/or injection length and/or number of injections can, if necessary, be adjusted as well. A correct load is obtained when the predetermined amount of fuel is injected, and the engine speed corresponds to the desired speed. If the engine load is too low, the desired fuel amount can not be injected without the engine speed racing. Therefore, engine speed, fuel amount and amount of exhaust brake applied is sequentially and/or concurrently controlled in step 303, whereafter it in step 304 is determined whether the desired load is obtained. If not, the process returns to step 303 for further adjustment, otherwise it continues to step 305. When the desired load has been set, it can very accurately be kept at a constant level. When the desired engine load has been achieved, the temperature of the catalytic converter is measured again, in step 305, and if it has reached normal working temperature, the process continues to step 306. Otherwise the system waits in step 305 and measures the temperature, e.g., continuously or at predetermined intervals. However, in order to prevent the process from endlessly measuring the temperature, a maximum time T can be set, and as long as t<T the process remains in step 305. If, on the other hand it is determined that t>T the process continues to step 307, wherein it is determined that the heating is aborted.

The above described method of using the exhaust brake enables that high engine loads can be reached, e.g., up to 40-50% of the power the engine is capable of producing. In theory, the exhaust brake can be set such that the engine delivers higher power than 40-50%. This, however, may cause breakdown of components such as exhaust brake actuator. Consequently, the upper limit of the applied load using the exhaust brake should preferably be limited, e.g. to 50% of the maximum load. Still, during normal driving such high loads are only reached during conditions such as heavy acceleration, high-speed driving and hill driving. In order to reduce the stress on the exhaust brake, external aggregates such as AC compressor, air compressors can be set to apply maximum load so as to reduce the load the exhaust brake must deliver.

Further, the present invention is capable of maintaining a desired load for a desired period of time, which is advantageous, e.g., when performing exhaust emission tests in the manner described below.

Consequently, the present invention provides a method that in a simple manner is capable of heating a catalytic converter of a stationary vehicle to its normal working temperature.

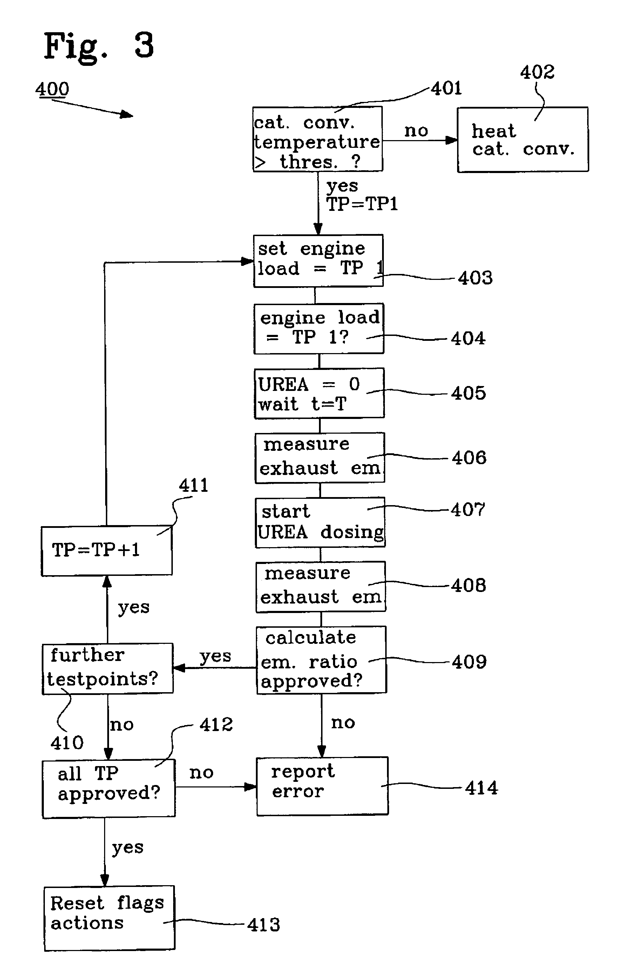

In fig. 3 is shown a flow diagram 400 of a process for self-invalidating activated fault flags. As was mentioned above, tests relating to fault in the exhaust emission control system has to be performed for various engine loads. It is a further object of the present invention to provide an inventive method for performing diagnostics tests of the vehicle exhaust emission system, in which the above described heating method is used to set engine load to desired test points.

The process starts in step 401, wherein it is determined whether the catalytic converter temperature is above a predetermined temperature level, the temperature level being a normal working temperature, e.g., the above mentioned 200°C. If the current temperature is below the temperature level, i.e., below a normal working temperature, the process continues to step 402, wherein the above mentioned heating process is initiated for execution. If it is determined, in step 401, that the working temperature is at or above the minimum normal working temperature, an engine load test point TP is set to test point 1. For example, there may be a number of engine loads for which the exhaust emissions must be measured and approved. The process then continues to step 403, wherein the engine is set to work at TP 1, e.g., in a similar manner as was described above with reference to fig. 2. It is then determined, in step 404, if the desired engine load is reached. If it is determined that the desired engine load is not reached, the process can, e.g., wait for a predetermined time to see if the desired load is achieved. When the predetermined time lapses an error message can, e.g., be generated. If the desired load is reached, on the other hand, the process continues to step 405, wherein urea dosing is set to zero, whereafter the process waits for a predetermined time. This is done in order to consume ammonium remnants in the catalytic converter, so that measurements can be started using a "clean" system. When said predetermined time has lapsed, which can be in the order of minutes, e.g., 5 or 15 minutes, the process continues to step 406, wherein the exhaust emissions are measured for the system using no urea additive. This measurement is performed in order to provide the system with a reference value, i.e., emission value for the catalytic converter without addition of any additive, for the particular test point TP. The process then continues to step 407, wherein urea dosing is started. When it is determined that the dosing is at a normal level, a new measurement is performed in step 408. When both the "raw" emission measurement and the urea influenced measurement have been performed, an emission ratio is calculated for these measurements in step 409. If the improvement, i.e., emission reduction is above a predetermined ratio, the behaviour of the exhaust emission system is approved for the test point, and the process continues to step 410, otherwise the process continues to step 414. In step 410 it is determined whether measurements are to be carried out for further test points, If so, the TP counter is incremented by one in step 411, and the process returns to step 403, wherein the engine is set to work at TP 2 (or 3 or 4 or...). If not, the process continues to step 412, wherein it is determined whether all test points have been approved, and if so, fault indicating flags, and consequence actions thereof, are reset in step 413, and the vehicle is determined fully operational. If not, a message indicating remaining fault is generated in step 414, e.g., for alerting the driver or garage mechanic. As an alternative to requiring that all test points are approved, it can, e.g., be enough that only specific test points fulfil the set criteria, or that the result of individual test points are weighted together, and the approval/disapproval of the exhaust emission system is based on the weighted result, in which case the process of fig. 3 is changed in accordance therewith.

As was mentioned above, the load can be very accurately controlled, and this has the advantage that emissions for a particular test point, the expected emissions can be stored in a memory in the system, and compared to the measured emissions. Therefore, the present invention also allows a method wherein only the "treated" emissions are measured, since absolute values of maximum emissions for a particular test point can be stored and compared with. Preferably, engine temperature is monitored during the test, so as to prevent engine overheating due to poor ventilation.

Further, the present invention allows that the same load can be accomplished for, in principle, an arbitrary engine speed. This has the advantage that emission for a few, beforehand known to be critical, test points, and if emissions at these points are ok, the system function is approved of. Instead of requiring acceptable emissions at all test points, it can be enough that only part of the test points have approved emissions, e.g., 3 or 4 out of 5.

Consequently, the present invention allows that exhaust emission control system diagnostics can be performed while the vehicle is standing still, and since this process may take a while, the diagnostics test can be initiated, whereafter the garage mechanic can attend to another vehicle while the test is running. The present invention also has the further advantage that while the exhaust emission diagnostics test is running, other onboard tests requiring a loaded engine working at its normal operating temperature can be performed as well, thereby further reducing the need for time consuming test drives.

In the above description, an onboard exhaust emission sensor is used to perform exhaust emission measurements. In principle, however, an onboard sensor is not necessary to perform the measurements according to the present invention, since measurements sensors of, e.g., a garage can be used instead since the required measurements can be performed while the vehicle is standing still. The onboard sensor, however, has the advantage that the required measurements can be performed, in practice, anywhere the vehicle can be parked. For example, the tests can be initiated by the driver when found suitable.

Further, in the above description the normal operating temperature of said catalytic converter has been described as a specific temperature or temperatures above a predetermined temperature level. It is to be understood that the normal working temperature can be determined to be within a certain temperature range, e.g., between 200°C and 300°C.

## Claims

1. Method for performing a test of an exhaust emission control system of a vehicle (200), comprising an SCR catalytic converter (201), said vehicle comprising an internal combustion engine (118) and a throttling device (206) for throttling an exhaust gas stream from said engine (218), and said method comprising the step of heating the SCR catalytic converter (201) to a working temperature, **characterised in that** said method further includes the steps of, when said vehicle is in a stationary state wherein the vehicle drive wheels supply substantially no load to said engine (118),
- controlling said throttling device (206) and a fuel amount to be supplied to said engine (118) such that at least a load is applied to said engine (118), wherein said load is above engine idling load, such that the exhaust gas generated in a combustion process of said engine (118) is heated to such temperature that said SCR catalytic converter (201) can be heated to a temperature exceeding a predetermined temperature level, and, when said SCR catalytic converter (201) is operating at a temperature exceeding said predetermined temperature level,
- measuring emissions from said SCR catalytic converter (201), and
- approving proper function of said exhaust emission control system (200) if the content of at least one exhaust emission in said exhaust gas stream is below a threshold.

2. Method according to claim 1, **characterised in that** it further comprises the step of measuring the temperature of said SCR catalytic converter (201), and generating a signal if said temperature is a normal working temperature.

3. Method according to claim 2, **characterised in that** said temperature is measured using a temperature sensor (204) in or in proximity to said SCR catalytic converter (201), and wherein said temperature is measured continuously, occasionally and/or at predetermined intervals.

4. Method according to claim 1, **characterized in that** said applying of said load further includes the step of controlling the engine speed.

5. Method according to any of the claims 1-4, **characterised in that** the setting of said engine load includes adjusting the injection time, injection angle, and/or injection length and/or number of injections.

6. Method according to any of the claims 1-5, **characterised in that** said predetermined temperature level of the SCR catalytic converter (201) temperature is between 190°C and 1000°C.

7. Method according to any of the claims 1-6, **characterised in that** said vehicle further comprises at least one engine mounted aggregate, and that the method further comprises the step of:
- activating said aggregate or aggregates so as to increase the load on said engine.

8. Method according to any of the claims 1-7, **characterised in that** a half shaft of said vehicle is disconnected from said engine.

9. Method according to any of the preceding claims, **characterised in that** said throttling device (206) is an exhaust brake and/or a VGT-turbo.

10. Method according to any of the claims 1-9, **characterised in that** the method further comprises the step of performing said measurement for a plurality of engine loads.

11. Method according to any of the claims 1 - 10, **characterised in that** it comprises the step of approving proper function of said exhaust emission control system (200) if the contents of a plurality of exhaust emissions in said exhaust gas stream are below a predetermined value.

12. Method according to any of the claims 1-11, **characterised in that** it comprises the step of approving proper function of said exhaust emission control system (200) if the content of an exhaust emission or exhaust emissions in said exhaust gas stream are below a predetermined value for at least some of a plurality of engine loads.

13. Method according to any of the claims 1-12, **characterised in that** it comprises the step of content of approving proper function of said exhaust emission control system (200) if a weighted sum of content of an exhaust emission or exhaust emissions in said exhaust gas stream are below a predetermined value, wherein at least some of a plurality of engine loads are used in said weighting operation.

14. Method according to any of the claims 1-13, **characterised in that** a reagent is selectively supplied to said SCR catalytic converter (201), and wherein the method further comprise the steps of:
- measuring emissions at said engine load when said SCR catalytic converter (201) is uninfluenced by said reagent,
- measuring emissions at said engine load when said reagent is supplied to said SCR catalytic converter (201), and
- comparing the measurements, and approving operation if the ratio between emissions when reagent is supplied to said SCR catalytic converter (201) and emissions when said SCR catalytic converter (201) is uninfluenced by said reagent is below a threshold.

15. Method according to claim 14, wherein said reagent is urea or ammonia.

16. Method according to any of the claims 1-15, **characterised in that** said engine load is at least 5% of the power said engine (118) is capable of delivering.

17. System for performing a test of an exhaust emission control system (200) of a vehicle, comprising an SCR catalytic converter (201), said vehicle comprising an internal combustion engine (118) and a throttling device (206) for throttling an exhaust gas stream from said engine (118), and said system comprising the step of heating the SCR catalytic converter (201) to a working temperature, **characterised in that** said system further includes means for, when said vehicle is in a stationary state wherein the vehicle drive wheels supply substantially no load to said engine,
- controlling said throttling device (206) and a fuel amount to be supplied to said engine (118) such that at least a load is applied to said engine (118), wherein said load is above engine idling load, such that the exhaust gas generated in a combustion process of said engine (118) is heated to such temperature that said SCR catalytic converter (201) can be heated to a temperature exceeding a predetermined temperature level, and, when said SCR catalytic converter (201) is operating at a temperature exceeding said predetermined temperature level,
- measuring emissions from said SCR catalytic converter (201), and
- approving proper function of said exhaust emission control system (200) if the content of at least one exhaust emission in said exhaust gas stream is below a threshold.

18. System according to claim 17, **characterised in that** it further comprises means for measuring the temperature of said SCR catalytic converter (201), and generating a signal if said temperature is a normal working temperature.

19. System according to claim 17, **characterised in that** said temperature is arranged to be measured using a temperature sensor (204) in or in proximity to said SCR catalytic converter (201), and wherein said temperature is arranged to be measured continuously, occasionally and/or at predetermined intervals.

20. System according to claim 17, **characterised in that** it further includes means for controlling engine speed.

21. System according to any of the claims 17-20, **characterised in that** the setting of said engine load includes adjusting the injection angle of fuel injection nozzles of said engine (118).

22. System according to any of the claims 17-21, **characterised in that** said SCR catalytic converter (201) working temperature is between 200°C and 1000°C.

23. System according to any of the claims 17-22, **characterised in that** said vehicle further comprises at least one engine mounted aggregate, and that the system includes means for:
- activating said aggregate or aggregates so as to increase the load on said engine.

24. system according to any of the claims 17-23, **characterised in that** said the transmission axle of said vehicle is arranged to be disconnected from said engine.

25. System according to any of the claims 17-24, **characterised in that** said throttling device (206) is an exhaust brake.

26. System according to claim 17, **characterised in that** the system further includes means for performing said measurement for a plurality of engine loads.

27. System according to claim 17 or 26, **characterised in that** it comprises means for approving proper function of said exhaust emission control system (200) if the contents of a plurality of exhaust emissions in said exhaust gas stream are below a predetermined value.

28. System according to any of the claims 17-27, **characterised in that** it includes means for approving proper function of said exhaust emission control system (200) if the content of an exhaust emission or exhaust emissions in said exhaust gas stream are below a predetermined value for at least some of a plurality of engine loads.

29. System according to any of the claims 17-28, **characterised in that** it comprises means for approving proper function of said exhaust emission control system,(200) if a weighted sum of the content of an exhaust emission or exhaust emissions in said exhaust gas stream are below a predetermined value, wherein at least some of a plurality of engine loads are used in said weighting operation.

30. System according to any of the claims 17-29, **characterised in that** a reagent is selectively supplied to said SCR catalytic converter (201), and wherein the system further comprise means for:
- measuring emissions at said engine load when said SCR catalytic converter (201) is uninfluenced by said reagent,
- measuring emissions at said engine load when said reagent is supplied to said SCR catalytic converter (201), and
- comparing the measurements, and approving operation if the ratio between emissions when reagent is supplied to said SCR catalytic converter (201) and emissions when said SCR catalytic converter (201) is uninfluenced by said reagent is below a threshold.

31. System according to claim 30, wherein said reagent is urea or ammonia.

32. System according to any of the claims 17-31, **characterised in that** said engine load is at least 5% of the power said engine (118) is capable of delivering.

33. Computer program product, **characterised in** code means, which when run on a control unit (207) in a vehicle and connected to an internal communication system in said vehicle causes the control unit (207) to execute the method according to any of the claims 1-16.

34. Computer program product including a computer readable medium (211) according to claim 33, wherein the code means are included in the computer readable medium (211).

35. Vehicle, **characterised in that** it includes a system according to any of the claims 17-32.

## Patentansprüche

1. Verfahren zum Durchführen eines Tests eines Abgasemissionssteuersystems eines Fahrzeugs (200), umfassend einen katalytischen SCR-Konverter (201), wobei das Fahrzeug einen internen Verbrennungsmotor (118) und eine Drosselvorrichtung (206) umfasst, um den Abgasstrom vom Motor (218) zu drosseln, und wobei das Verfahren den Schritt des Heizens des katalytischen SCR-Konverters (201) auf eine Arbeitstemperatur umfasst,
**dadurch gekennzeichnet, dass** das Verfahren in einem stationären Zustand des Fahrzeugs, bei dem die Fahrzeugantriebsräder im Wesentlichen keine Last auf den Motor (118) ausüben, weiterhin folgende Schritte umfasst:
- Steuern der Drosselvorrichtung (206) und einer Kraftstoffmenge, die dem Motor (118) zuzuführen ist, derart, dass zumindest eine Last auf den Motor (118) ausgeübt wird, wobei die Last oberhalb der Motorleerlauflast ist, so dass das Abgas, das in einem Verbrennungsprozess des Motors (118) erzeugt wird, auf eine derartige Temperatur erhöht wird, dass der katalytische SCR-Konverter (201) auf eine Temperatur erwärmt werden kann, die ein vorbestimmtes Temperaturniveau überschreitet, und dann, wenn der katalytische SCR-Konverter (201) bei einer Temperatur betrieben wird, die das vorbestimmte Temperaturniveau überschreitet,
- Messen der Emissionen vom katalytischen SCR-Konverter (201), und
- Bestätigen der korrekten Funktionsweise des Abgasemissionssteuersystems (200), wenn der Gehalt von zumindest einer Abgasemission im Abgasstrom unterhalb eines Schwellenwertes liegt.

2. Verfahren nach Anspruch 1,
**dadurch gekennzeichnet, dass** das Verfahren weiterhin den Schritt des Messens der Temperatur des katalytischen SCR-Konverters (201) umfasst und des Erzeugens eines Signals, wenn diese Temperatur einer normalen Arbeitstemperatur entspricht.

3. Verfahren nach Anspruch 2,
**dadurch gekennzeichnet, dass** die Temperatur mittels eines Temperatursensor (204) innerhalb oder nahe des katalytischen SCR-Konverters (201) gemessen wird, und wobei die Temperatur kontinuierlich gemessen wird, gelegentlich gemessen wird und/oder innerhalb vorbestimmter Intervalle gemessen wird.

4. Verfahren nach Anspruch 1,
**dadurch gekennzeichnet, dass** das Anlegen der Last weiterhin den Schritt des Steuerns der Motordrehzahl umfasst.

5. Verfahren nach einem der Ansprüche 1 bis 4,
**dadurch gekennzeichnet, dass** das Einstellen der Motorlast das Anpassen der Injektionszeit, des Injektionswinkels und/oder der Injektionslänge und/oder der Anzahl der Injektionen umfasst.

6. Verfahren nach einem der Ansprüche 1 bis 5, **dadurch gekennzeichnet, dass** das vorbestimmte Temperaturniveau der Temperatur des katalytischen SCR-Konverters (201) zwischen 190° C und 1000° C liegt.

7. Verfahren nach einem der Ansprüche 1 bis 6,
**dadurch gekennzeichnet, dass** das Fahrzeug weiterhin zumindest ein am Motor angebrachtes Aggregat umfasst und dass das Verfahren weiterhin den folgenden Schritt umfasst:
- Aktivieren des Aggregats oder der Aggregate, um die Last auf den Motor zu erhöhen.

8. Verfahren nach einem der Ansprüche 1 bis 7,
**dadurch gekennzeichnet, dass** eine Halbwelle bzw. Steckachse des Fahrzeugs vom Motor getrennt ist.

9. Verfahren nach einem der vorangehenden Ansprüche,
**dadurch gekennzeichnet, dass** die Drosselvorrichtung (206) eine Abgasbremse und/oder ein VGT-Turbo ist.

10. Verfahren nach einem der Ansprüche 1 bis 9,
**dadurch gekennzeichnet, dass** das Verfahren weiterhin den Schritt umfasst, die Messung für eine Vielzahl von Motorlasten auszuführen.

11. Verfahren nach einem der Ansprüche 1 bis 10,
**dadurch gekennzeichnet, dass** das Verfahren den Schritt des Bestätigens einer korrekten Funktionsweise des Abgasemissionssteuersystems (200) umfasst, wenn die Gehalte einer Mehrzahl von Abgasemissionen im Abgasstrom unterhalb eines vorbestimmten Wertes liegen.

12. Verfahren nach einem der Ansprüche 1 bis 11,
**dadurch gekennzeichnet, dass** das Verfahren den Schritt des Bestätigens einer korrekten Funktionsweise des Abgasemissionssteuersystems (200) umfasst, wenn der Gehalt einer Abgasemission oder von Abgasemissionen im Abgasstrom unterhalb eines bestimmten Wertes liegt, zumindest für einige aus einer Mehrzahl an Motorlasten.

13. Verfahren nach einem der Ansprüche 1 bis 12,
**dadurch gekennzeichnet, dass** das Verfahren weiterhin den Schritt des Bestätigens einer korrekten Funktionsweise des Abgasemissionssteuersystems (200) umfasst, wenn eine gewichtete Summe des Gehalts einer Abgasemission oder Abgasemissionen im Abgasstrom unterhalb eines vorbestimmten Wertes liegt, wobei zumindest einige aus der Mehrzahl von Motorlasten im Berechnungsschritt des Gewichtens verwendet werden.

14. Verfahren nach einem der Ansprüche 1 bis 13,
**dadurch gekennzeichnet, dass** ein Reagens selektiv dem katalytischen SCR-Konverter (201) zugeführt wird, und wobei das Verfahren weiterhin folgende Schritte umfasst:
- Messen der Emissionen bei der Motorlast, wenn der katalytische SCR-Konverter (201) unbeeinflusst vom Reagens ist,
- Messen der Emissionen bei der Motorlast, wenn das Reagens dem katalytischen SCR-Konverter (201) zugeführt wird, und
- Vergleichen der Messwerte und Bestätigen der Funktionsweise, wenn das Verhältnis der Emissionen zu einem Zeitpunkt, wenn das Reagens dem katalytischen SCR-Konverter (201) zugeführt wird, und die Emissionen zu einem Zeitpunkt, wenn der katalytische SCR-Konverter (201) unbeeinflusst vom Reagens ist, sich unterhalb eines Schwellenwerts befindet.

15. Verfahren nach Anspruch 14,
wobei das Reagens Harnstoff oder Ammoniak ist.

16. Verfahren nach einem der Ansprüche 1 bis 15,
**dadurch gekennzeichnet, dass** die Motorlast zumindest 5 % der Last beträgt, die der Motor (118) zur Verfügung stellen kann.

17. Anordnung zum Durchführen eines Tests eines Abgasemissionssteuersystems eines Fahrzeugs (200), umfassend einen katalytischen SCR-Konverter (201), wobei das Fahrzeug einen internen Verbrennungsmotor (118) und eine Drosselvorrichtung (206) umfasst, um den Abgasstrom vom Motor (218) zu drosseln, und wobei das Verfahren den Schritt des Heizens des katalytischen SCR-Konverters (201) auf eine Arbeitstemperatur umfasst,
**dadurch gekennzeichnet, dass** die Anordnung in einem stationären Zustand des Fahrzeugs, bei dem die Fahrzeugantriebsräder im Wesentlichen keine Last auf den Motor (118) ausüben, folgende Mittel umfasst:
- Mittel zum Steuern der Drosselvorrichtung (206) und einer Kraftstoffmenge, die dem Motor (118) zuzuführen ist, derart, dass zumindest eine Last auf den Motor (118) ausgeübt wird, wobei die Last oberhalb der Motorleerlauflast ist, so dass das Abgas, das in einem Verbrennungsprozess des Motors (118) erzeugt wird, auf eine derartige Temperatur erhöht wird, dass der katalytische SCR-Konverter (201) auf eine Temperatur erwärmt werden kann, die ein vorbestimmtes Temperaturniveau überschreitet, und dann, wenn der katalytische SCR-Konverter (201) bei einer Temperatur betrieben wird, die das vorbestimmte Temperaturniveau überschreitet,
- Mittel zum Messen der Emissionen vom katalytischen SCR-Konverter (201), und
- Mittel zum Bestätigen der korrekten Funktionsweise des Abgasemissionssteuersystems (200), wenn der Gehalt von zumindest einer Abgasemission im Abgasstrom unterhalb eines Schwellenwertes liegt.

18. Anordnung nach Anspruch 17,
**dadurch gekennzeichnet, dass** die Anordnung weiterhin Mittel zum Messen der Temperatur des katalytischen SCR-Konverters (201) umfasst und zum Erzeugen eines Signals, wenn diese Temperatur einer normalen Arbeitstemperatur entspricht.

19. Anordnung nach Anspruch 17,
**dadurch gekennzeichnet, dass** die Temperatur mittels eines Temperatursensor (204) innerhalb oder nahe des katalytischen SCR-Konverters (201) messbar ist, und wobei die Temperatur kontinuierlich messbar ist, gelegentlich messbar ist und/oder innerhalb vorbestimmter Intervalle messbar ist.

20. Anordnung nach Anspruch 17,
**dadurch gekennzeichnet, dass** diese weiterhin Mittel zum Steuern der Motordrehzahl umfasst.

21. Anordnung nach einem der Ansprüche 17 bis 20,
**dadurch gekennzeichnet, dass** das Einstellen der Motorlast das Anpassen des Injektionswinkels der Krafstoffeinspritzdüsen des Motors (118) umfasst.

22. Anordnung nach einem der Ansprüche 17 bis 21,
**dadurch gekennzeichnet, dass** die Arbeitstemperatur des katalytischen SCR-Konverters (201) zwischen 200° C und 1000° C liegt.

23. Anordnung nach einem der Ansprüche 17 bis 22,
**dadurch gekennzeichnet, dass** das Fahrzeug weiterhin zumindest ein am Motor angebrachtes Aggregat umfasst und dass die Anordnung weiterhin Mittel umfasst, zum:
- Aktivieren des Aggregats oder der Aggregate, um die Last auf den Motor zu erhöhen.

24. Anordnung nach einem der Ansprüche 17 bis 23,
**dadurch gekennzeichnet, dass** die Übertragungsachse des Fahrzeugs dazu eingerichtet ist, vom Motor getrennt zu sein.

25. Anordnung nach einem der Ansprüche 17 bis 24,
**dadurch gekennzeichnet, dass** die Drosselvorrichtung (206) eine Abgasbremse ist.

26. Anordnung nach einem der Ansprüche 17,
**dadurch gekennzeichnet, dass** die Anordnung weiterhin Mittel umfasst, um die Messung für eine Vielzahl von Motorlasten auszuführen.

27. Anordnung nach einem der Ansprüche 17 oder 26,
**dadurch gekennzeichnet, dass** diese Mittel zum Bestätigen einer korrekten Funktionsweise des Abgasemissionssteuersystems (200) umfasst, wenn die Gehalte einer Mehrzahl von Abgasemissionen im Abgasstrom unterhalb eines vorbestimmten Wertes liegen.

28. Anordnung nach einem der Ansprüche 17 bis 27,
**dadurch gekennzeichnet, dass** diese Mittel zum Bestätigen einer korrekten Funktionsweise des Abgasemissionssteuersystems (200) umfasst, wenn der Gehalt einer Abgasemission oder von Abgasemissionen im Abgasstrom unterhalb eines bestimmten Wertes liegt, für zumindest einige aus einer Mehrzahl an Motorlasten.

29. Anordnung nach einem der Ansprüche 17 bis 28,
**dadurch gekennzeichnet, dass** diese Mittel zum Bestätigen einer korrekten Funktionsweise des Abgasemissionssteuersystems (200) umfasst, wenn eine gewichtete Summe des Gehalts einer Abgasemission oder von Abgasemissionen im Abgasstrom unterhalb eines vorbestimmten Wertes liegt, wobei zumindest einige aus der Mehrzahl von Motorlasten im Berechnungsschritt des Gewichtens verwendet werden.

30. Anordnung nach einem der Ansprüche 17 bis 29,
**dadurch gekennzeichnet, dass** ein Reagens selektiv dem katalytischen SCR-Konverter (201) zugeführt wird, und wobei das Verfahren Mittel umfasst zum:
- Messen der Emissionen bei der Motorlast wenn der katalytische SCR-Konverter (201) unbeeinflusst vom Reagens ist,
- Messen der Emissionen bei der Motorlast, wenn das Reagens dem katalytischen SCR-Konverter (201) zugeführt wird, und
- Vergleichen der Messwerte und Bestätigen der Funktionsweise, wenn das Verhältnis der Emissionen, wenn das Reagens dem katalytischen SCR-Konverter (201) zugeführt wird und Emissionen, wenn der katalytische SCR-Konverter (201) unbeeinflusst vom Reagens ist, sich unterhalb eines Schwellenwerts befindet.

31. Anordnung nach Anspruch 30,
wobei das Reagens Harnstoff oder Ammoniak ist.

32. Anordnung nach einem der Ansprüche 17 bis 31,
**dadurch gekennzeichnet, dass** die Motorlast zumindest 5 % der Last beträgt, die der Motor (118) zur Verfügung stellen kann.

33. Computerprogrammprodukt,
**gekennzeichnet durch** Programmcodemittel, die bei Ausführung auf einer Steuereinheit (207) in einem Fahrzeug und beim Anschließen an ein internes Kommunikationssystem im Fahrzeug die Steuereinheit (207) dazu veranlassen, das Verfahren nach einem der Ansprüche 1 bis 16 auszuführen.

34. Computerprogrammprodukt nach Anspruch 33, umfassend ein computerlesbares Medium (211),
wobei das computerlesbaren Medium (211) die Programmcodemittel umfasst.

35. Fahrzeug,
**dadurch gekennzeichnet, dass** eine Anordnung nach einem der Ansprüche 17 bis 32 umfasst.

## Revendications

1. Procédé pour effectuer un test d'un système de contrôle d'émission d'échappement d'un véhicule (200), comprenant un convertisseur catalytique à réduction catalytique sélective (201), ledit véhicule comprenant un moteur à combustion interne (118) et un dispositif d'étranglement (206) pour étrangler un courant de gaz d'échappement à partir dudit moteur (218), et ledit procédé comprenant l'étape de chauffage du convertisseur catalytique à réduction catalytique sélective (201) à une température de travail, **caractérisé en ce que** ledit procédé comprend de plus les étapes consistant, lorsque ledit véhicule est dans un état stationnaire dans lequel les roues d'entraînement du véhicule ne délivrent sensiblement aucune charge audit moteur (118),
- à commander ledit dispositif d'étranglement (206) et une quantité de carburant devant être délivrée audit moteur (118) de telle sorte qu'au moins une charge soit appliquée audit moteur (118), ladite charge étant supérieure à une charge de ralenti de moteur, de telle sorte que les gaz d'échappement générés dans un processus de combustion dudit moteur (118) soient chauffés à une température telle que ledit convertisseur catalytique à réduction catalytique sélective (201) puisse être chauffé à une température dépassant un niveau de température prédéterminé, et, lorsque ledit convertisseur catalytique à réduction catalytique sélective (201) fonctionne à une température dépassant ledit niveau de température prédéterminé,
- à mesurer les émissions à partir dudit convertisseur catalytique à réduction catalytique sélective (201), et
- à approuver un fonctionnement correct dudit système de contrôle d'émission d'échappement (200) si la proportion d'au moins une émission d'échappement dans ledit courant de gaz d'échappement est inférieure à un seuil.

2. Procédé selon la revendication 1, **caractérisé en ce qu'**il comprend de plus l'étape de mesure de la température dudit convertisseur catalytique à réduction catalytique sélective (201), et de génération d'un signal si ladite température est une température de travail normale.

3. Procédé selon la revendication 2, **caractérisé en ce que** ladite température est mesurée à l'aide d'un capteur de température (204) dans ledit convertisseur catalytique à réduction catalytique sélective (201) ou à proximité de celui-ci, et dans lequel ladite température est mesurée de façon continue, de façon occasionnelle et/ou à des intervalles prédéterminés.

4. Procédé selon la revendication 1, **caractérisé en ce que** ladite application de ladite charge comprend de plus l'étape de commande de la vitesse du moteur.

5. Procédé selon l'une quelconque des revendications 1 à 4, **caractérisé en ce que** l'établissement de ladite charge de moteur comprend l'ajustement du temps d'injection, de l'angle d'injection, et/ou de la longueur d'injection et/ou du nombre d'injections.

6. Procédé selon l'une quelconque des revendications 1 à 5, **caractérisé en ce que** ledit niveau de température prédéterminé de la température du convertisseur catalytique à réduction catalytique sélective (201) est entre 190° C et 1000° C.

7. Procédé selon l'une quelconque des revendications 1 à 6, **caractérisé en ce que** ledit véhicule comprend de plus au moins un agrégat monté sur le moteur, et **en ce que** le procédé comprend de plus l'étape consistant à :
- activer ledit agrégat ou lesdits agrégats de façon à accroître la charge sur ledit moteur.

8. Procédé selon l'une quelconque des revendications 1 à 7, **caractérisé en ce qu'**un demi-arbre dudit véhicule est déconnecté dudit moteur.

9. Procédé selon l'une quelconque des revendications précédentes, **caractérisé en ce que** ledit dispositif d'étranglement (206) est un frein d'échappement ou un turbocompresseur à géométrie variable.

10. Procédé selon l'une quelconque des revendications 1 à 9, **caractérisé en ce que** le procédé comprend de plus l'étape de réalisation de ladite mesure pour une pluralité de charges de moteur.

11. Procédé selon l'une quelconque des revendications 1 à 10, **caractérisé en ce qu'**il comprend l'étape d'approbation d'un fonctionnement correct dudit système de contrôle d'émission d'échappement (200) si les contenus d'une pluralité d'émissions d'échappement dans ledit courant de gaz d'échappement sont inférieurs à une valeur prédéterminée.

12. Procédé selon l'une quelconque des revendications 1 à 11, **caractérisé en ce qu'**il comprend l'étape d'approbation du fonctionnement correct dudit système de contrôle d'émission d'échappement (200) si les contenus d'une émission d'échappement ou d'émissions d'échappement dans ledit courant de gaz d'échappement sont inférieurs à une valeur prédéterminée pour au moins certaines d'une pluralité de charges de moteur.

13. Procédé selon l'une quelconque des revendications 1 à 12, **caractérisé en ce qu'**il comprend l'étape de contenus d'approbation du fonctionnement correct dudit système de contrôle d'émission d'échappement (200) si une somme pondérée de contenus d'une émission d'échappement ou d'émissions d'échappement dans ledit courant de gaz d'échappement est inférieure à une valeur prédéterminée, au moins certaines d'une pluralité de charges de moteur étant utilisées dans ladite opération de pondération.

14. Procédé selon l'une quelconque des revendications 1 à 13, **caractérisé en ce qu'**un réactif est délivré de façon sélective audit convertisseur catalytique à réduction catalytique sélective (201), et dans lequel le procédé comprend de plus les étapes consistant à :
- mesurer des émissions à ladite charge de moteur lorsque ledit convertisseur catalytique à réduction catalytique sélective (201) n'est pas influencé par ledit réactif,
- mesurer des émissions à ladite charge de moteur lorsque ledit réactif est délivré audit convertisseur catalytique à réduction catalytique sélective (201), et
- comparer les mesures, et approuver le fonctionnement si le rapport entre les émissions lorsqu'un réactif est délivré audit convertisseur catalytique à réduction catalytique sélective (201) et les émissions lorsque ledit convertisseur catalytique à réduction catalytique sélective (201) n'est pas influencé par ledit réactif est inférieur à un seuil.

15. Procédé selon la revendication 14, dans lequel ledit réactif est de l'urée ou de l'ammoniac.

16. Procédé selon l'une quelconque des revendications 1 à 15, **caractérisé en ce que** ladite charge de moteur est d'au moins 5% de la puissance que ledit moteur (118) est capable de délivrer.

17. Système pour effectuer un test d'un système de contrôle d'émission d'échappement (200) d'un véhicule, comprenant un convertisseur catalytique à réduction catalytique sélective (201), ledit véhicule comprenant un moteur à combustion interne (118) et un dispositif d'étranglement (206) pour étrangler un courant de gaz d'échappement à partir dudit moteur (118), et ledit système comprenant l'étape de chauffage du convertisseur catalytique à réduction catalytique sélective (201) à une température de travail,
**caractérisé en ce que** ledit système comprend de plus des moyens pour, lorsque ledit véhicule est dans un état stationnaire dans lequel les roues d'entraînement du véhicule ne délivrent sensiblement aucune charge audit moteur,
- commander ledit dispositif d'étranglement (206) et une quantité de carburant devant être délivrée audit moteur (118) de telle sorte qu'au moins une charge soit appliquée audit moteur (118), ladite charge étant supérieure à une charge de ralenti de moteur, de telle sorte que les gaz d'échappement générés dans un processus de combustion dudit moteur (118) soient chauffés à une température telle que ledit convertisseur catalytique à réduction catalytique sélective (201) puisse être chauffé à une température dépassant un niveau de température prédéterminé, et, lorsque ledit convertisseur catalytique à réduction catalytique sélective (201) fonctionne à une température dépassant ledit niveau de température prédéterminé,
- mesurer les émissions à partir dudit convertisseur catalytique à réduction catalytique sélective (201), et
- approuver un fonctionnement correct dudit système de contrôle d'émission d'échappement (200) si la proportion d'au moins une émission d'échappement dans ledit courant de gaz d'échappement est inférieure à un seuil.

18. Système selon la revendication 17, **caractérisé en ce qu'**il comprend de plus des moyens pour mesurer la température dudit convertisseur catalytique à réduction catalytique sélective (201), et générer un signal si ladite température est une température de travail normale.

19. Système selon la revendication 17, **caractérisé en ce que** ladite température est agencée de façon à être mesurée à l'aide d'un capteur de température (204) dans ledit convertisseur catalytique à réduction catalytique sélective (201) ou à proximité de celui-ci, et dans lequel ladite température est agencée de façon à être mesurée de façon continue, de façon occasionnelle et/ou à des intervalles prédéterminés.

20. Système selon la revendication 17, **caractérisé en ce qu'**il comprend de plus des moyens pour commander la vitesse du moteur.

21. Système selon l'une quelconque des revendications 17 à 20, **caractérisé en ce que** l'établissement de ladite charge de moteur comprend l'ajustement de l'angle d'injection de buses d'injection de carburant dudit moteur (118).

22. Système selon l'une quelconque des revendications 17 à 21, **caractérisé en ce que** la température de travail dudit convertisseur catalytique à réduction catalytique sélective (201) est entre 200° C et 1000° C.

23. Système selon l'une quelconque des revendications 17 à 22, **caractérisé en ce que** ledit véhicule comprend de plus au moins un agrégat monté sur le moteur, et **en ce que** le système comprend de plus des moyens pour :
- activer ledit agrégat ou lesdits agrégats de façon à accroître la charge sur ledit moteur.

24. Système selon l'une quelconque des revendications 17 à 23, **caractérisé en ce que** ledit arbre de transmission dudit véhicule est agencé de façon à être déconnecté dudit moteur.

25. Système selon l'une quelconque des revendications 17 à 24, **caractérisé en ce que** ledit dispositif d'étranglement (206) est un frein d'échappement.

26. Système selon la revendication 17, **caractérisé en ce que** le système comprend de plus des moyens pour effectuer ladite mesure pour une pluralité de charges de moteur.

27. Système selon la revendication 17 ou 26, **caractérisé en ce qu'**il comprend des moyens pour approuver un fonctionnement correct dudit système de contrôle d'émission d'échappement (200) si les contenus d'une pluralité d'émissions d'échappement dans ledit courant de gaz d'échappement sont inférieurs à une valeur prédéterminée.

28. Système selon l'une quelconque des revendications 17 à 27, **caractérisé en ce qu'**il comprend des moyens pour approuver un fonctionnement correct dudit système de contrôle d'émission d'échappement (200) si les contenus d'une émission d'échappement ou d'émissions d'échappement dans ledit courant de gaz d'échappement sont inférieurs à une valeur prédéterminée pour au moins certaines d'une pluralité de charges de moteur.

29. Système selon l'une quelconque des revendications 17 à 28, **caractérisé en ce qu'**il comprend des moyens pour approuver un fonctionnement correct dudit système de contrôle d'émission d'échappement (200) si une somme pondérée de contenus d'une émission d'échappement ou d'émissions d'échappement dans ledit courant de gaz d'échappement est inférieure à une valeur prédéterminée, au moins certaines d'une pluralité de charges de moteur étant utilisées dans ladite opération de pondération.

30. Système selon l'une quelconque des revendications 17 à 29, **caractérisé en ce qu'**un réactif est délivré de façon sélective audit convertisseur catalytique à réduction catalytique sélective (201), et dans lequel le système comprend de plus des moyens pour :
- mesurer des émissions à ladite charge de moteur lorsque ledit convertisseur catalytique à réduction catalytique sélective (201) n'est pas influencé par ledit réactif,
- mesurer des émissions à ladite charge de moteur lorsque ledit réactif est délivré audit convertisseur catalytique à réduction catalytique sélective (201), et
- comparer les mesures, et approuver le fonctionnement si le rapport entre les émissions lorsqu'un réactif est délivré audit convertisseur catalytique à réduction catalytique sélective (201) et les émissions lorsque ledit convertisseur catalytique à réduction catalytique sélective (201) n'est pas influencé par ledit réactif est inférieur à un seuil.

31. Système selon la revendication 30, dans lequel ledit réactif est de l'urée ou de l'ammoniac.

32. Système selon l'une quelconque des revendications 17 à 31, **caractérisé en ce que** ladite charge de moteur est d'au moins 5% de la puissance que ledit moteur (118) est capable de délivrer.

33. Produit de programme informatique, **caractérisé en ce que** des moyens formant code, qui, lorsqu'ils sont exécutés sur une unité de commande (207) dans un véhicule et connectés à un système de communication interne dans ledit véhicule, provoquent l'exécution par l'unité de commande (207) du procédé selon l'une quelconque des revendications 1 à 16.

34. Produit de programme informatique comprenant un support lisible par un ordinateur (211) selon la revendication 33, dans lequel les moyens formant code sont inclus dans le support lisible par un ordinateur (211).

35. Véhicule, **caractérisé en ce qu'**il comprend un système selon l'une quelconque des revendications 17 à 32.
